# FASCICULE DE BREVET EUROPEEN

(11) **EP 3 507 175 B1**
(45) Date de publication et mention de la délivrance du brevet: **03.03.2021**
(21) Numéro de dépôt: 17755137.1
(22) Date de dépôt: 14.08.2017
(51) Int. Cl.: B62J 1/00, B62J 1/04, B62J 1/08

(54) **SIÈGE ADAPTÉ NOTAMMENT À UNE BICYCLETTE**
SITZ, INSBESONDERE FÜR EIN FAHRRAD
SEAT SUITABLE IN PARTICULAR FOR A BICYCLE

(30) Priorité: 30.08.2016 FR 1670478
(43) Date de publication de la demande: 10.07.2019
(73) Titulaire: PHY KY PSY Concept, 45100 Orléans (FR)
(72) Inventeur: GAULT, Philippe, 45100 Orléans (FR)
(74) Mandataire: Marconnet, Sébastien
(86) Numéro de dépôt international: PCT/EP2017/070622
(87) Numéro de publication internationale: WO 2018/041619

(56) Documents cités:
- CN-A- 104 908 852
- CN-U- 86 202 623
- DE-C- 98 535
- DE-C- 827 008
- DE-U1- 8 805 245
- KR-A- 20160 056 739
- US-A- 604 347
- US-A- 5 725 274

## Description

La présente invention porte sur un siège conçu sur la base de critères de physiologie, d'anatomie, et de confort. L'invention trouve une application particulièrement avantageuse, mais non exclusive, avec les bicyclettes.

En effet, l'invention pourra également être utilisée avec les vélos d'appartement et autres appareils de musculation sur lesquels la personne se tient assis et doit réaliser un mouvement de pédalage ou un mouvement analogue avec ses jambes.

Le principe de la bicyclette est de pouvoir se déplacer en position assise, en sorte que l'adaptation du siège à la morphologie de l'utilisateur présente une grande importance. Or, les selles actuelles sont basées sur l'utilisation de la zone séparant les fesses qui comprend plusieurs parties susceptibles de souffrir de pressions fortes et prolongées, voire même de finir par présenter des lésions pathologiques.

Le document CN86202623 décrit une selle oscillante de façon alternative. La selle est conçue selon un principe de liaison à quatre barres. Par rapport aux selles existantes, le point de force optimal de la croupe d'un corps humain est positionné sur la selle pour faire en sorte que le corps humain soit en équilibre pendant la conduite de la bicyclette.

Le document DE827008 divulgue un siège selon les préambules des revendications 1 et 5.

Le document DE98535 décrit une selle de bicyclette comportant deux moitiés reliées l'une à l'autre autour d'un axe transversal horizontal.

Le document CN104908852 décrit une selle de vélo comportant une paire de surfaces d'assise capables de soutenir les cuisses gauche et droite de manière réversible et de se balancer le long d'un arbre horizontal.

L'invention vise à remédier efficacement à ces inconvénients en proposant un siège selon la revendication indépendante 1, notamment pour une bicyclette, comportant deux demi-selles concaves adaptées chacune à recevoir une fesse d'un utilisateur,
- chaque demi-selle étant montée rotative de manière à autoriser un basculement d'avant en arrière de chaque demi-selle lors d'un mouvement de pédalage,
- chaque demi-selle comportant un bord externe saillant,
- ledit siège comportant un système de stabilisation longitudinale du cycliste apte à assurer une retenue alternée du mouvement des demi-selles,
- un organe vertical, tel qu'une plaque verticale ou un trépied, étant solidaire de chaque demi-selle, dans lequel
- le système de stabilisation longitudinale comprend un élément ayant une extrémité solidaire de l'organe d'une des demi-selles, cet élément passant par une poulie, et présentant son autre extrémité solidaire de l'organe de l'autre demi-selle, de façon à travailler en tension par l'intermédiaire de la poulie pour le rappel d'une des demi-selles par l'autre lors du mouvement de pédalage,
- la poulie étant reprise par un palan apte à régler une position d'inclinaison moyenne des demi-selles.

L'invention permet ainsi d'éviter toute contrainte sur la partie médiane du postérieur du cycliste. En outre, la configuration des demi-selles permet d'accompagner, sans le contrarier, le mouvement de chaque fesse et chaque cuisse lors du pédalage.

Selon une réalisation, chaque demi-selle est mobile en rotation autour d'un axe de rotation transversal déporté vers l'arrière des demi-selles, au moins à la moitié des demi-selles, par exemple à la moitié, au trois-quarts, au quatre cinquième, ou au-delà des demi-selles.

Selon une réalisation, l'axe de rotation transversal est implanté à une extrémité d'une barre de support inclinée vers l'arrière par rapport à une direction verticale.

Selon une réalisation, au moins un brin final du palan ressort pour être bloqué par un organe de verrouillage, tel qu'un taquet, en sifflet ou à mors ou à roulette.

L'invention a également pour objet un siège selon la revendication indépendante 5, notamment pour une bicyclette, comportant deux demi-selles concaves adaptées chacune à recevoir une fesse d'un utilisateur,
- chaque demi-selle étant montée rotative de manière à autoriser un basculement d'avant en arrière de chaque demi-selle lors d'un mouvement de pédalage,
- chaque demi-selle comportant un bord externe saillant,
- ledit siège comportant un système de stabilisation longitudinale du cycliste apte à assurer une retenue alternée du mouvement des demi-selles, dans lequel le système de stabilisation longitudinale comporte:
- une plaque pivotante suivant un axe de rotation sensiblement vertical positionné entre les deux demi-selles, et
- une sangle reliant chaque extrémité de cette plaque pivotante à l'arrière d'une demi-selle correspondante, de telle façon que, lors d'une rotation alternée de la plaque pivotante, l'abaissement de l'une des demi-selles entraîne le relevage de l'autre demi-selle.

Selon une réalisation, les sangles sont réglables en longueur pour adapter une inclinaison des demi-selles.

Selon une réalisation, chaque demi-selle comporte au moins un trou traversant pour l'évacuation d'eau en temps de pluie.

Selon une réalisation, le siège comporte des moyens de réglage de l'écartement des demi-selles pour adapter ledit siège à différentes morphologies.

L'invention sera mieux comprise à la lecture de la description qui suit et à l'examen des figures qui l'accompagnent. Ces figures ne sont données qu'à titre illustratif mais nullement limitatif de l'invention.
La figure 1 montre une vue en perspective du siège de bicyclette selon la présente invention;
La figure 2 montre une vue de l'arrière du siège de bicyclette selon la présente invention;
Les figures 3a, 3b, et 3c sont des vues de face, de côté, et de dessus des bras coudés de la structure de siège selon la présente invention;
Les figures 4a, 4b, et 4c sont des vues de face, de côté, et de dessus des plaques coudées de la structure de siège selon la présente invention;
La figure 5 est une vue de dessus de la plaque pivotante appartenant au système de stabilisation longitudinale selon la présente invention;
La figure 6 est une vue de dessus de la plaque supérieure de rigidification de la structure de siège selon la présente invention;
Les figures 7 à 9 sont des vues illustrant un autre mode de réalisation du siège de bicyclette selon l'invention
La figure 10 est une vue illustrant une variante de siège de bicyclette ne faisant pas partie de l'invention.

Les éléments identiques, similaires, ou analogues conservent la même référence d'une figure à l'autre.

Dans la description qui suit, la direction longitudinale correspond à la direction d'allongement longitudinal de la bicyclette, tandis que la direction transversale correspond à une direction perpendiculaire à la direction longitudinale qui est sensiblement parallèle à l'axe des roues. En outre, les termes relatifs du type "horizontal", "vertical", "avant", "arrière", sont entendus par référence à un siège installé sur une bicyclette en position d'utilisation. Ces termes ont le sens commun que leur donnerait un utilisateur assis sur le siège de la bicyclette.

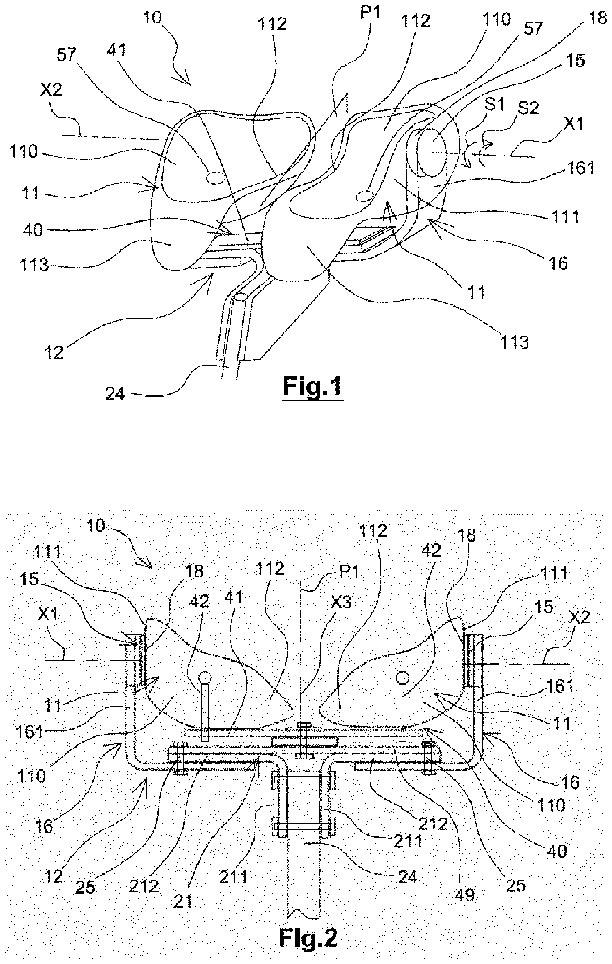

Les figures 1 et 2 montrent un siège 10 notamment pour une bicyclette comportant deux demi-selles 11 concaves adaptées chacune à recevoir une fesse d'un cycliste. Les demi-selles 11 sont de préférence symétriques par rapport à un plan médian P1.

Chaque demi-selle 11 est montée rotative par rapport à une structure de siège 12 autour d'un axe de rotation X1, X2 de manière à autoriser un basculement d'avant en arrière de chaque demi-selle 11 lors d'un mouvement de pédalage, c'est-à-dire que chaque demi-selle 11 pourra tourner autour de l'axe X1, X2 suivant le sens S1 (cf. figure 1) pour s'incliner vers l'avant et suivant un sens S2 opposé au sens de rotation S1 pour s'incliner vers l'arrière de la bicyclette.

De préférence, les axes X1 et X2 sont confondus l'un par rapport à l'autre et situés le plus près possible des articulations des hanches de l'utilisateur.

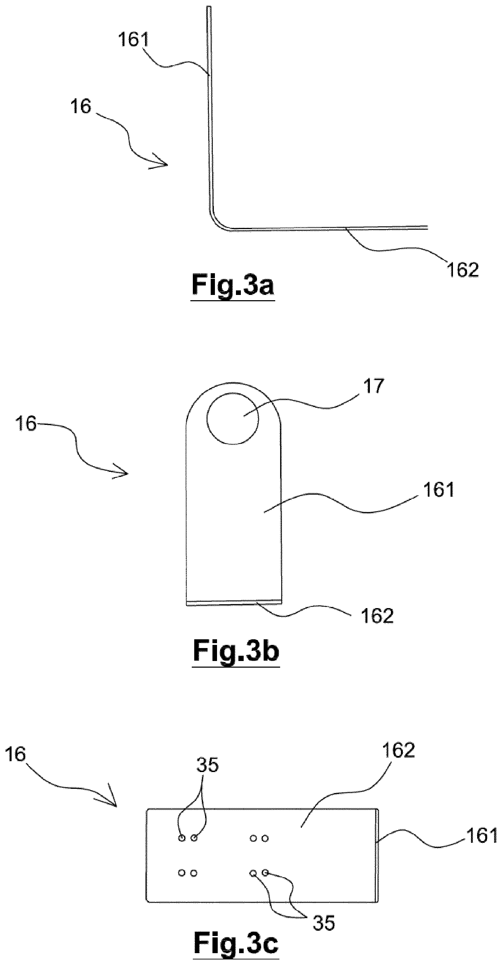

A cet effet, des liaisons rotatives 15 sont interposées entre la partie verticale 161 de bras coudés 16 externes et un bord externe 111 d'une demi-selle 11 correspondante. Comme cela est visible sur les figures 3a à 3c, la partie verticale 161 est munie du côté de son extrémité libre d'une ouverture 17 pour le passage d'un pivot 18 correspondant. La partie verticale 161 de chaque bras coudé 16 se situe dans le prolongement d'une partie horizontale 162.

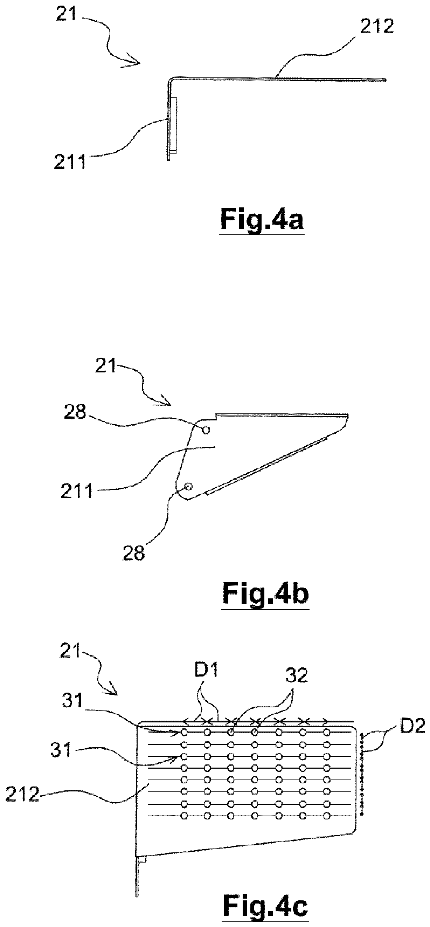

Chaque bras coudé 16 est fixé sur une plaque coudée 21 correspondante établissant une liaison avec une tige 24 du siège 10 fixée à un cadre de la bicyclette (non représenté). Chaque bras coudé 16 pourra par exemple être fixé à une plaque coudée 21 correspondante au moyen de boulons 25 permettant la solidarisation entre les parties horizontales 162 des bras coudés et les parties horizontales 212 des plaques coudées 21. Comme on peut le voir sur les figures 4a à 4c, chaque partie horizontale 212 des plaques coudées 21 se situe dans le prolongement d'une partie verticale 211 correspondante ayant ici une forme sensiblement triangulaire et munie de trous 28 pour le passage d'organes de fixation à la tige 24 du siège 10 ou à un support correspondant.

Il est à noter aussi que les deux bras coudés 16 sont identiques et montés en symétrie par rapport au plan P1. Les deux plaques coudées 21 sont symétriques dans leur coudure pour être montées en symétrie par rapport au plan P1.

Avantageusement, on prévoit des moyens de réglage de l'écartement des demi-selles 11 pour pouvoir adapter le siège 10 à toutes les morphologies. Ces moyens de réglage sont constitués en l'occurrence par une pluralité de séries 31 de trous 32 réalisés dans la partie horizontale des plaques coudées 21, tel que cela est montré sur la figure 4c. Deux trous 32 d'une même série 31 sont espacés entre eux de façon régulière d'une distance D1. Deux trous 32 de deux séries 31 adjacentes sont espacés entre eux de façon régulière d'une distance D2.

Des ouvertures 35 réalisées dans les bras coudés 16 sont destinées à être positionnées en coïncidence avec les trous 32 des plaques coudées 21 pour permettre l'insertion des boulons 25. Les boulons 25 sont mis en place une fois que les bras coudés 16 ont été déplacés dans la position souhaitée. Il est ainsi possible d'obtenir un réglage de l'écart transversal entre les deux demi-selles 11 ainsi qu'un réglage suivant l'axe longitudinal.

En variante, il serait possible d'utiliser des systèmes à glissière munis d'un dispositif de verrouillage pour assurer le réglage transversal et longitudinal des demi-selles 11.

Selon un mode de réalisation particulier, un système de stabilisation longitudinale 40 du cycliste est configuré pour empêcher les deux demi-selles 11 de pencher simultanément vers l'avant.

A cet effet, le système de stabilisation longitudinale 40 comporte une plaque pivotante 41 suivant un axe de rotation sensiblement vertical X3 positionné entre les deux demi-selles 11 et au moins une sangle 42 reliant chaque extrémité transversale de la plaque pivotante 41 à l'arrière d'une demi-selle 11 correspondante, de telle façon que, lors de la rotation alternée de la plaque pivotante 41, l'abaissement de l'une des demi-selles 11 entraîne le relevage de l'autre demi-selle 11. Ainsi, le bassin du cycliste ne glisse pas vers l'avant lors du mouvement de pédalage.

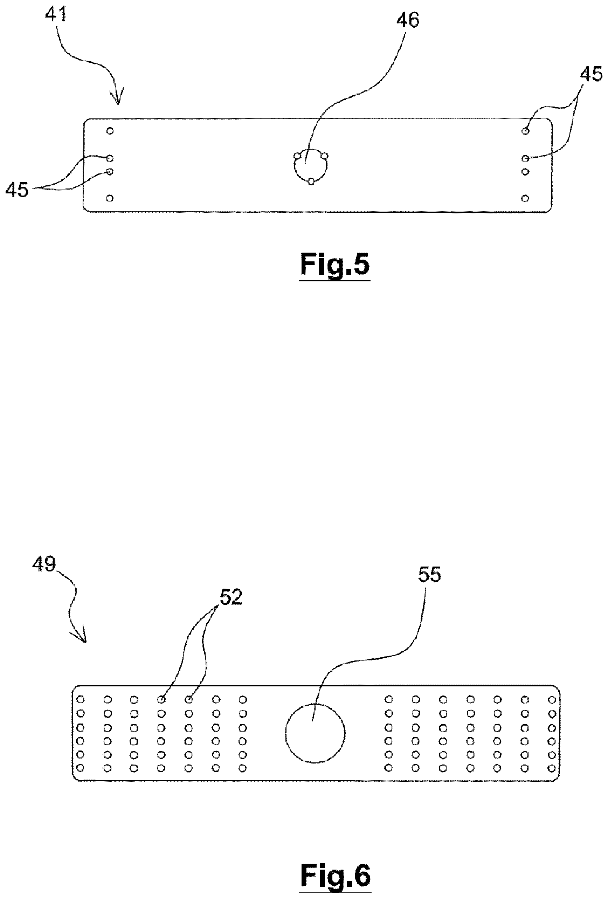

Comme on peut le voir sur la figure 5, la plaque pivotante 41 présente par exemple une forme rectangulaire. La plaque pivotante 41 est destinée à s'étendre horizontalement en dessous des demi-selles 11. La plaque pivotante 41 est munie à ses extrémités d'ouvertures 45 destinées à recevoir une extrémité d'une sangle 42. La liaison entre la plaque pivotante 41 et les sangles 42 pourra par exemple être obtenue en réalisant un nœud à l'extrémité de la sangle 42 après avoir fait passer la sangle 42 à travers une ouverture 45 correspondante. Les ouvertures 45 utilisées pour les sangles 42 pourront être adaptées en fonction du positionnement des demi-selles 11. La plaque pivotante 41 comporte en outre une ouverture centrale 46 pour le passage d'une tige formant l'axe de rotation X3. La plaque pivotante 41 pourra participer à la sustentation des demi-selles 11.

Les sangles 42 sont de préférence réglables en longueur pour optimiser l'inclinaison des demi-selles 11.

En variante, d'autres systèmes pourront être envisagés pour aboutir à la retenue alternée du mouvement des demi-selles 11, notamment des systèmes à ressorts et/ou à câble sur poulies, ou encore des systèmes à barre oscillante dans des créneaux positionnés sous les demi-selles 11.

En outre, une plaque de rigidification 49 est fixée sur les bras coudés 16 et sur les plaques coudées 21. Plus précisément, comme on peut le voir sur la figure 6, la plaque de rigidification 49 présente une forme sensiblement rectangulaire. La plaque de rigidification 49 est fixée aux parties horizontales 162, 212 des bras coudés 16 et des plaques coudées 21. A cet effet, la plaque de rigidification 49 comporte des trous 52 réalisés suivant un agencement correspondant à celui des trous 32 ménagés dans les plaques coudées 21.

Les organes de fixation 25 permettant de fixer chaque bras coudé 16 sur une plaque coudée 21 correspondante pénètrent ainsi successivement dans les ouvertures 35 des bras coudés 16, les trous 32 correspondants de la plaque coudée 21, et les trous 52 correspondants de la plaque de rigidification 49. Lorsque les bras coudés 16 et les demi-selles 11 associées sont installés sur la structure de siège 12, chaque plaque coudée 21 est ainsi montée serrée entre la plaque de rigidification 49 et un bras coudé 16 correspondant. La plaque de rigidification 49 comporte également une ouverture 55 pour le passage de la tige de rotation de la plaque pivotante 41.

Il est à noter également que chaque demi-selle 11 comporte une paroi concave 110 ayant une courbure correspondant à celle d'une fesse d'un utilisateur. Chaque demi-selle 11 comporte un bord externe 111 saillant dirigé vers le haut, c'est-à-dire dans la direction opposée par rapport à la plaque pivotante 41. De tels bords permettent de stabiliser latéralement le postérieur du cycliste. En outre, les bords externes 111 portent chacun un pivot permettant le basculement des demi-selles 11 d'avant en arrière lors du pédalage.

De préférence, le bord interne 112 présente une faible hauteur, par exemple de l'ordre d'un centimètre maximum.

En outre, un bord avant 113 destiné à s'appuyer sur la cuisse permet d'éviter un angle antérieur trop aigu qui peut devenir gênant lors du mouvement de pédalage. Ce bord avant 113 est transversalement concave et peut ne faire que deux à quatre centimètres. Un angle de 120 degrés plus ou moins 30 degrés avec le fond de la demi-selle 11 est adapté.

Les demi-selles 11 sont réalisées pour la meilleure répartition de la pression, et une bonne circulation sanguine. Leur forme, leur rembourrage, et leur revêtement pourront être adaptés pour un confort optimal.

Comme cela est illustré par la figure 1, chaque demi-selle 11 pourra le cas échéant comporter au moins un trou 57 traversant au milieu pour l'évacuation de l'eau en temps de pluie.

Il existe d'autres possibilités de montage ou de configuration des bras coudés 16 des demi-selles 11 et de liaison avec le cadre du vélo. Ainsi, les axe de rotation X1, X2 des demi-selles 11 pourront être situés sous les demi-selles 11 et non sur les côtés externes, ce qui est moins physiologique mais néanmoins fonctionnel. Cela pourra simplifier le montage par un support médian des demi-selles 11.

Une solution avec doubles articulations et des doubles bras par côté est aussi possible pour un effet similaire.

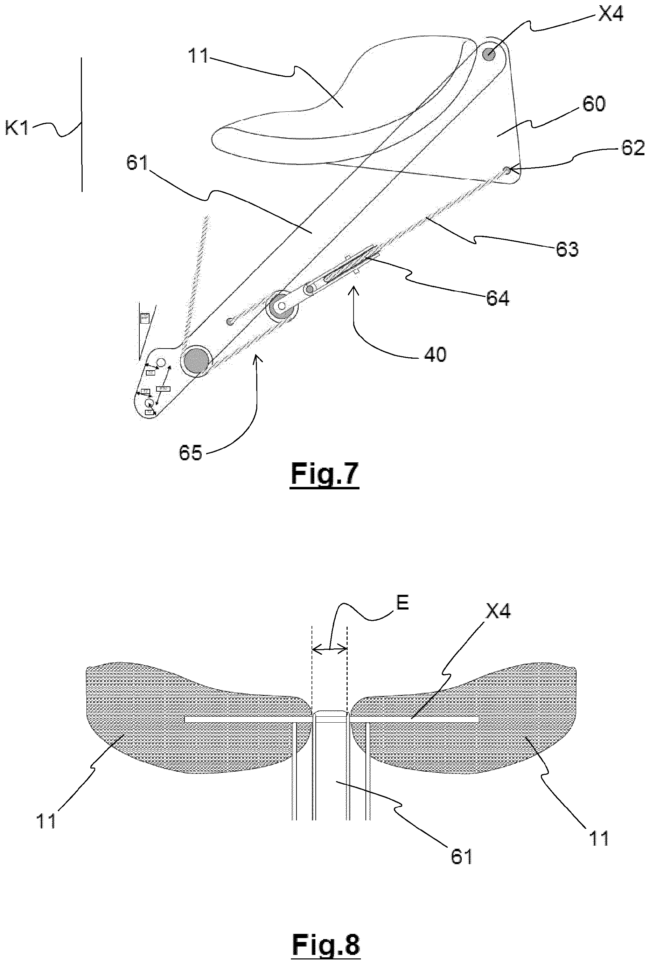

Dans le mode de réalisation des figures 7 à 9, chaque demi-selle 11 est mobile en rotation autour d'un axe de rotation transversal X4 déporté vers l'arrière des demi-selles 11, au moins à la moitié des demi-selles 11, par exemple à la moitié, au trois-quarts, au quatre cinquième, ou au-delà des demi-selles 11, c'est-à-dire que l'axe X4 peut être situé au-delà du bord arrière des demi-selles 11, comme cela est représenté sur la figure 7. L'axe de rotation transversal X4 est implanté sur une barre de support inclinée 61 vers l'arrière par rapport à une direction verticale K1.

En outre, un organe vertical 60, par exemple une plaque verticale dans l'exemple de réalisation, est solidaire de chaque demi-selle 11. En variante, l'organe vertical 60 pourra prendre la forme d'un trépied. Chaque plaque verticale 60 comprend un moyen de fixation 62 d'un cordon 63 qui travaille en tension par l'intermédiaire d'une poulie 64 pour le rappel d'une demi-selle 11 par l'autre. A cette fin, le cordon 63 présente une extrémité solidaire de la plaque 60 d'une des demi-selles 11 via son moyen de fixation 62, en l'occurrence un trou retenant un nœud du cordon 63, et passe par la poulie 64, et présente son autre extrémité solidaire de la plaque 60 de l'autre demi-selle 11 via son organe de fixation 62.

Cette poulie 64 peut être reprise par un palan 65 qui règle la position d'inclinaison moyenne des demi-selles 11. Ce palan 65 est apte à laisser les demi-selles 11 à la verticale en cas de pluie si la bicyclette n'est pas utilisée. Le brin final du palan 65, qui peut être à plusieurs brins (2, 3, 4 ou plus), peut ressortir à la partie avant de la barre de support 61 et être bloqué par un organe de verrouillage, tel qu'un taquet, en sifflet ou à mors ou à roulette. Ce brin final peut être prolongé par un élastique pour le maintenir stable et accessible.

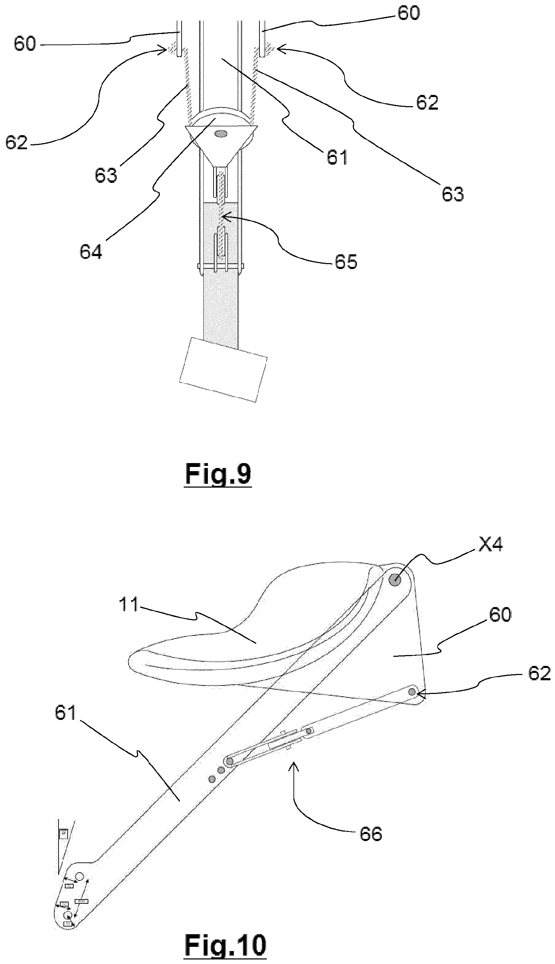

Les demi-selles 11 conservent avantageusement les bords, notamment externes, relevés pour assurer une stabilité suffisante du vélocyclopédiste. En variante, le siège 10 peut comporter un système à balancier 66, tel que cela est représenté sur la figure 10. Cette variante ne fait pas partie de l'invention.

Dans tous les cas, le siège 10 pourra comporter un système de réglage de l'écart E des demi-selles 11 pour adapter le siège 10 à différentes morphologies.

## Revendications

1. Siège (10), notamment pour une bicyclette, comportant deux demi-selles (11) concaves adaptées chacune à recevoir une fesse d'un utilisateur,
- chaque demi-selle (11) étant montée rotative de manière à autoriser un basculement d'avant en arrière de chaque demi-selle (11) lors d'un mouvement de pédalage,
- chaque demi-selle (11) comportant un bord externe (111) saillant,
- ledit siège (10) comportant un système de stabilisation longitudinale (40) du cycliste apte à assurer une retenue alternée du mouvement des demi-selles (11),
- un organe vertical (60), tel qu'une plaque verticale ou un trépied, étant solidaire de chaque demi-selle (11),
**caractérisé en ce que**
- le système de stabilisation longitudinale (40) comprend un élément (63) ayant une extrémité solidaire de l'organe (60) d'une des demi-selles (11), cet élément (63) passant par une poulie (64), et présentant son autre extrémité solidaire de l'organe (60) de l'autre demi-selle (11), de façon à travailler en tension par l'intermédiaire de la poulie (64) pour le rappel d'une des demi-selles (11) par l'autre lors du mouvement de pédalage,
- la poulie (64) étant reprise par un palan (65) apte à régler une position d'inclinaison moyenne des demi-selles (11).

2. Siège (10) selon la revendication 1, **caractérisé en ce que** chaque demi-selle (11) est mobile en rotation autour d'un axe de rotation transversal (X4) déporté vers l'arrière des demi-selles (11), au moins à la moitié des demi-selles (11), par exemple à la moitié, au trois-quarts, au quatre cinquième, ou au-delà des demi-selles (11).

3. Siège (10) selon la revendication 2, **caractérisé en ce que** l'axe de rotation transversal (X4) est implanté à une extrémité d'une barre de support (61) inclinée vers l'arrière par rapport à une direction verticale (K1).

4. Siège (10) selon la revendication 1, **caractérisé en ce qu'**au moins un brin final du palan (65) ressort pour être bloqué par un organe de verrouillage, tel qu'un taquet, en sifflet ou à mors ou à roulette.

5. Siège (10) notamment pour une bicyclette, comportant deux demi-selles (11) concaves adaptées chacune à recevoir une fesse d'un utilisateur,
- chaque demi-selle (11) étant montée rotative de manière à autoriser un basculement d'avant en arrière de chaque demi-selle (11) lors d'un mouvement de pédalage,
- chaque demi-selle (11) comportant un bord externe (111) saillant,
- ledit siège (10) comportant un système de stabilisation longitudinale (40) du cycliste apte à assurer une retenue alternée du mouvement des demi-selles (11),
**caractérisé en ce que** le système de stabilisation longitudinale (40) comporte:
- une plaque pivotante (41) suivant un axe de rotation (X3) sensiblement vertical positionné entre les deux demi-selles (11), et
- une sangle (42) reliant chaque extrémité de cette plaque pivotante (41) à l'arrière d'une demi-selle (11) correspondante, de telle façon que, lors d'une rotation alternée de la plaque pivotante (41), l'abaissement de l'une des demi-selles (11) entraîne le relevage de l'autre demi-selle (11).

6. Siège (10) selon la revendication 5, **caractérisé en ce que** les sangles (42) sont réglables en longueur pour adapter une inclinaison des demi-selles (11).

7. Siège (10) selon l'une quelconque des revendications 1 à 6, **caractérisé en ce que** chaque demi-selle (11) comporte au moins un trou traversant (57) pour l'évacuation d'eau en temps de pluie.

8. Siège (10) selon l'une quelconque des revendications 1 à 7, **caractérisé en ce qu'**il comporte des moyens de réglage (31, 32, 25) de l'écartement (E) des demi-selles (11) pour adapter ledit siège à différentes morphologies.

## Patentansprüche

1. Sitz (10), insbesondere für ein Fahrrad, der zwei konkave Halbsättel (11) beinhaltet, die jeweils angepasst sind, um eine Gesäßbacke eines Nutzers aufzunehmen,
- wobei jeder Halbsattel (11) drehend montiert ist, um ein Kippen jedes Halbsattels (11) von vorne nach hinten bei einer Pedalbetätigungsbewegung zu erlauben,
- wobei jeder Halbsattel (11) einen äußeren hervortretenden Rand (111) beinhaltet,
- wobei der Sitz (10) ein Längsstabilisierungssystem (40) des Fahrradfahrers beinhaltet, das imstande ist, für eine abwechselnde Zurückhaltung der Bewegung der Halbsättel (11) zu sorgen,
- ein vertikales Organ (60), wie eine vertikale Platte oder ein Stativ, das fest mit jedem Halbsattel (11) verbunden ist,
**dadurch gekennzeichnet, dass**
- das Längsstabilisierungssystem (40) ein Element (63) umfasst, das ein Ende aufweist, das fest mit dem Organ (60) eines der Halbsättel (11) verbunden ist, wobei dieses Element (63) durch eine Seilscheibe (64) hindurch verläuft, und sein anderes, fest mit dem Organ (60) des anderen Halbsattels (11) verbundenes Ende aufweist, um zum Rückstellen eines der Halbsättel (11) durch den anderen bei der Pedalbetätigungsbewegung anhand der Seilscheibe (64) unter Spannung zu arbeiten,
- wobei die Seilscheibe (64) durch einen Seilzug (65) übernommen wird, der imstande ist, eine mittlere Neigungsposition der Halbsättel (11) zu regeln.

2. Sitz (10) nach Anspruch 1, **dadurch gekennzeichnet, dass** jeder Halbsattel (11) um eine querlaufende Drehachse (X4), die zur Rückseite der Halbsättel (11) hin versetzt ist, mindestens zur Hälfte der Halbsättel (11), beispielsweise zur Hälfte, zu drei Viertel, zu vier Fünftel, oder darüber hinaus der Halbsättel (11) drehbeweglich ist.

3. Sitz (10) nach Anspruch 2, **dadurch gekennzeichnet, dass** die querlaufende Drehachse (X4) an einem Ende einer Trägerstange (61), die in Bezug auf eine vertikale Richtung (K1) nach rückwärts geneigt ist, eingesetzt ist.

4. Sitz (10) nach Anspruch 1, **dadurch gekennzeichnet, dass** mindestens ein letzter Strang des Seilzugs (65) hervorsteht, um durch ein Verriegelungsorgan, wie einen Riegel, mit Klemmlasche, oder Klemmbacke oder Walze blockiert zu werden.

5. Sitz (10) insbesondere für ein Fahrrad, der zwei konkave Halbsättel (11) beinhaltet, die jeweils angepasst sind, um eine Gesäßbacke eines Nutzers aufzunehmen,
- wobei jeder Halbsattel (11) drehend montiert ist, um ein Kippen jedes Halbsattels (11) von vorne nach hinten bei einer Pedalbetätigungsbewegung zu erlauben,
- wobei jeder Halbsattel (11) einen äußeren hervortretenden Rand (111) beinhaltet,
- wobei der Sitz (10) ein Längsstabilisierungssystem (40) des Fahrradfahrers beinhaltet, das imstande ist, für eine abwechselnde Zurückhaltung der Bewegung der Halbsättel (11) zu sorgen,
**dadurch gekennzeichnet, dass** das Längsstabilisierungssystem (40) beinhaltet:
- eine Platte (41), die entlang einer im Wesentlichen vertikalen Drehachse (X3) schwenkbar ist, die zwischen den beiden Halbsätteln (11) positioniert ist, und
- einen Gurt (42), der jedes Ende dieser schwenkbaren Platte (41) hinter einem entsprechenden Halbsattel (11) derart verbindet, dass bei einer abwechselnden Drehung der schwenkbaren Platte (41), die Absenkung des einen der Halbsättel (11) das Anheben des anderen Halbsattels (11) antreibt.

6. Sitz (10) nach Anspruch 5, **dadurch gekennzeichnet, dass** die Gurte (42) in der Länge regelbar sind, um eine Neigung der Halbsättel (11) anzupassen.

7. Sitz (10) nach einem der Ansprüche 1 bis 6, **dadurch gekennzeichnet, dass** jeder Halbsattel (11) mindestens ein Durchgangsloch (57) zum Ableiten von Wasser bei Regenwetter beinhaltet.

8. Sitz (10) nach einem der Ansprüche 1 bis 7, **dadurch gekennzeichnet, dass** er Mittel zum Regeln (31, 32, 25) des Abstandes (E) der Halbsättel (11) beinhaltet, um den Sitz verschiedenen Körperformen anzupassen.

## Claims

1. A seat (10), in particular for a bicycle, having two concave half-saddles (11) each adapted to accommodate one buttock of a user,
- each half-saddle (11) being mounted rotatably to allow each half-saddle (11) to tilt back and forth during a pedaling movement,
- each half-saddle (11) having a projecting outer edge (111),
- said seat (10) comprising a system for longitudinal stabilization (40) of the cyclist capable of ensuring an alternate retention of the movement of the half-saddles (11),
- a vertical member (60), such as a vertical plate or a tripod, being linked to each half-saddle (11),
**characterized in that**:
- the longitudinal stabilization system (40) comprises an element (63) having one end linked to the member (60) of one of the half-saddles (11), said element (63) passing through a pulley (64), and having its other end linked to the member (60) of the other half-saddle (11), in order to act in tension by the intermediary of the pulley (64) for the return of one of the half-saddles (11) by the other during the pedaling movement,
- the pulley (64) being taken up by a hoist (65) capable of adjusting an average tilt position of the half-saddles (11).

2. The seat (10) according to claim 1, **characterized in that** each half-saddle (11) is movable in rotation about a transverse axis of rotation (X4) offset towards the rear of the half-saddles (11), at least to the half of the half-saddles (11), for example to half, three-quarters, four-fifths, or more of the half-saddles(11).

3. The seat (10) according to claim 2, **characterized in that** the transverse axis of rotation (X4) is located at one end of a support bar (61) tilted towards the rear with respect to a vertical direction (K1).

4. The seat (10) according to claim 1, **characterized in that** at least one end strand of the hoist (65) projects to be blocked by a locking member, such as a cleat, slanted, with bit or roller.

5. The seat (10), in particular for a bicycle, having two concave half-saddles (11) each adapted to accommodate one buttock of a user,
- each half-saddle (11) being mounted rotatably to allow each half-saddle (11) to tilt back and forth during a pedaling movement,
- each half-saddle (11) having a projecting outer edge (111),
- said seat (10) comprising a longitudinal stabilization system (40) for the cyclist capable of ensuring alternate retention of the movement of the half-saddles (11),
**characterized in that** the longitudinal stabilization system (40) comprises:
- a pivoting plate (41) along a substantially vertical axis of rotation (X3) positioned between the two half-saddles (11), and
- a strap (42) connecting each end of this pivoting plate (41) at the rear of a corresponding half-saddle (11), such that, during an alternating rotation of the pivoting plate (41), the lowering of one of the half-saddles (11) causes the raising of the other half-saddle (11).

6. The seat (10) according to claim 5, **characterized in that** the straps (42) are adjustable in length to adapt an inclination of the half-saddles (11).

7. The seat (10) according to any one of claims 1 to 6, **characterized in that** each half-saddle (11) comprises at least one through hole (57) for the evacuation of water in rainy weather.

8. The seat (10) according to any one of claims 1 to 7, **characterized in that** it comprises means (31, 32, 25) for adjusting the spacing (E) of the half-saddles (11) to adapt said seat to different morphologies.
